# EUROPEAN PATENT SPECIFICATION

(11) **EP 3 661 623 B1**
(45) Date of publication and mention of the grant of the patent: **27.08.2025**
(21) Application number: 18756070.1
(22) Date of filing: 31.07.2018
(51) Int. Cl.: B01D 39/16, B01D 45/16, B01D 39/08

(54) **DESORBER FOR AIR CONDITIONING SYSTEM HAVING INTEGRATED MICROEMULSION-BASED AIR DEHUMIDIFICATION**
DESORBER FÜR KLIMAANLAGE MIT INTEGRIERTER MIKROEMULSIONSBASIERTER LUFTENTFEUCHTUNG
DÉSORBEUR POUR SYSTÈME DE CLIMATISATION AYANT UNE DÉSHUMIDIFICATION D'AIR À BASE DE MICROÉMULSION INTÉGRÉE

(30) Priority: 31.07.2017 US 201762539206 P
(43) Date of publication of application: 10.06.2020
(73) Proprietor: Carrier Corporation, Palm Beach Gardens, FL 33418 (US)
(72) Inventor: CORDATOS, Haralambos, East Hartford Connecticut 06108 (US); DARDAS, Zissis A., East Hartford Connecticut 06108 (US)
(74) Representative: Dehns
(86) International application number: PCT/US2018/044538
(87) International publication number: WO 2019/027976

(56) References cited:
- JP-A- 2012 206 008
- US-A- 5 660 606
- US-A1- 2016 258 362

## Description

### BACKGROUND

Exemplary embodiments pertain to the art of desorbing systems and more specifically to a desorber for an air conditioning system having integrated microemulsion-based air dehumidification.

One type of air conditioning system is a heating ventilation air conditioning (HVAC) system with an integrated microemulsion-based air dehumidification system is a technology that may provide latent air cooling while enhancing system performance. A microemulsion-based air dehumidification system may present an efficient and cost-effective alternative to dehumidification technologies involving corrosive liquid desiccant solutions (LiCl, LiBr) and desiccant wheels. A microemulsion-based air dehumidification system may be enabled by organic liquid-based microemulsion sorbents which may provide the following relative benefits: 1) heat required for microemulsion organic liquid regeneration e.g. via a microemulsion-based desorber may be a fraction of that required when using other desiccants; 2) desiccant regeneration temperature may be comparably low; 3) when heat is supplied, absorbed fluids may be released as liquid rather than vapor thereby reducing the need for certain condensers while desorbed fluids may be used to cool other condensers; and 4) the utilized organic solutions are not corrosive thereby reducing operational complexity and cost.

In view of the benefits of an HVAC system using a microemulsion-based air dehumidification system, there is a desire to address oil carryover downstream of a microemulsion-based desorber. Two categories of oil carryover include: (1) carryover in a form of an aerosol (liquid droplets); and (2) carryover in a form of a vapor. Oil droplets may occur from airflow velocity profiles created by geometrical features of oil wetted surfaces. Oil vapor may occur from temperature of the process vis-à-vis the oil vapor pressure. Typical processes for capturing oil aerosols may involve impacting and coalescing oil droplets onto a high surface area organic or metal fiber mesh. Processes for capturing oil vapors may involve refrigeration or/and adsorption of the oil vapor using a high-capacity solid sorbent.

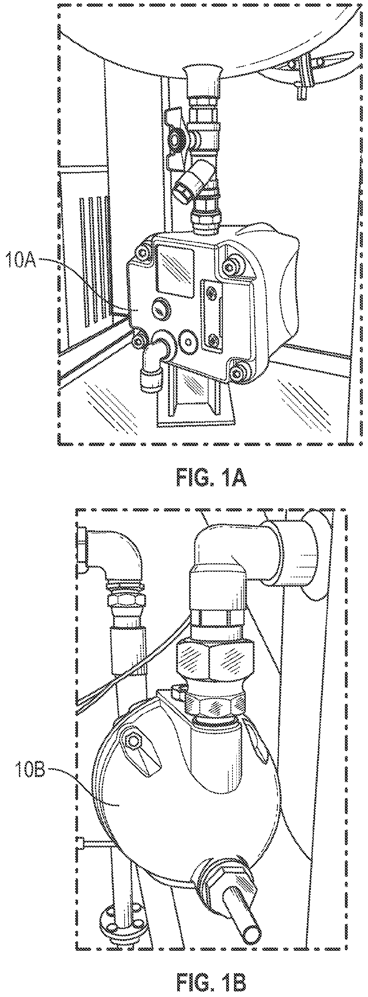

Industrial devices may experience oil carryover issues including for example oil-lubricated rotary screw air compressors. Devices that address oil carryover may be designed for systems which produce large quantities of oil carryover compared with an HVAC system and may be designed for continuous removal of captured oil droplets, which can result in energy waste. FIGS. 1A and 1B illustrate known industrial desorbers 10a, 10b having automated drains. Such systems may be very complex and costly. In addition, such systems may be designed for operations that involve relatively high pressures providing oversized components that allow for an undesirably high pressure drop.

US2016258362 describes a spiral mist eliminator comprising a layered assembly for removing fine oil aerosols from an airflow.

### BRIEF DESCRIPTION

Viewed from a first aspect, the present invention provides a desorber for minimizing aerosol concentration of oil for an air conditioning system with an integrated microemulsion-based air dehumidification system, the desorber comprising: a spiral-wound sheet that is wound to form an exterior end, an interior end, a top end and a bottom end, wherein a collection tube is disposed at the interior end, wherein the spiral-wound sheet comprises: a plurality of de-entrainment mesh layers extending between the exterior end and the interior end of the spiral-wound sheet, and a plurality of substantially air impermeable connector layers extending between the exterior end and the interior end of the spiral-wound sheet, and wherein: the connector layers are interlaid with the mesh layers between the top end and the bottom end of the spiral-wound sheet; the connector layers are interlaid with the mesh layers in a stripe pattern; and the collection tube is at a radial center of the spiral-wound sheet, characterized in that: the collection tube is surrounded by an inner vapor filter, the inner vapor filter being an activated carbon cartridge having a diameter and length that is sufficient to provide desired filtering of oil vapor in air traveling therethrough; and the desorber includes another activated carbon cartridge, wrapped around the spiral-wound sheet, forming an outer vapor filter.

The top and bottom layers of the spiral-wound sheet may be connector layers.

The mesh layers and/or connector layers may be substantially dimensionally alike.

An air conditioning system with an integrated microemulsion-based air dehumidification system, may include the desorber for minimizing aerosol concentration of oil having one or more of the above features.

Viewed from a second aspect, the present invention provides a method of desorbing oil from oil impregnated air in an air conditioning system with integrated microemulsion-based air dehumidification system, the method comprising: channeling the air into a desorber for minimizing aerosol concentration of oil having a spiral-wound sheet, the spiral-wound sheet having been wound to form an exterior end and an interior end, a top end and a bottom end, wherein a collection tube is connected to the interior end, wherein the spiral-wound sheet comprises: a plurality of de-entrainment mesh layers extending between the exterior end and the interior end of the spiral-wound sheet, and a plurality of substantially air impermeable connector layers extending between the exterior end and the interior end of the spiral-wound sheet, and wherein: the connector layers are interlaid with the mesh layers between the top end and the bottom end of the spiral-wound sheet, the connector layers are interlaid with the mesh layers in a stripe pattern; and the collection tube is at a radial center of the spiral-wound sheet, characterized in that: the collection tube is surrounded by an inner vapor filter, the inner vapor filter being an activated carbon cartridge having a diameter and length that is sufficient to provide desired filtering of oil vapor in air traveling therethrough; and the desorber includes another activated carbon cartridge, wrapped around the spiral-wound sheet, forming an outer filter.

### BRIEF DESCRIPTION OF THE DRAWINGS

The following descriptions should not be considered limiting in any way. With reference to the accompanying drawings, like elements are numbered alike:
FIGS. 1A and 1B illustrate known automated drains installed in industrial oil carryover capture systems;
FIG. 2 illustrates a known centrifugal separator;
FIGS. 3A and 3B illustrates a known demister;
FIG. 4 illustrates a known coalescing filter;
FIGS. 5A and 5B illustrate a desorber according to a disclosed embodiment; and
FIG. 6 illustrates a vapor filter utilized in a bottle.

### DETAILED DESCRIPTION

A detailed description of one or more embodiments of the disclosed apparatus and method are presented herein by way of exemplification and not limitation with reference to the Figures.

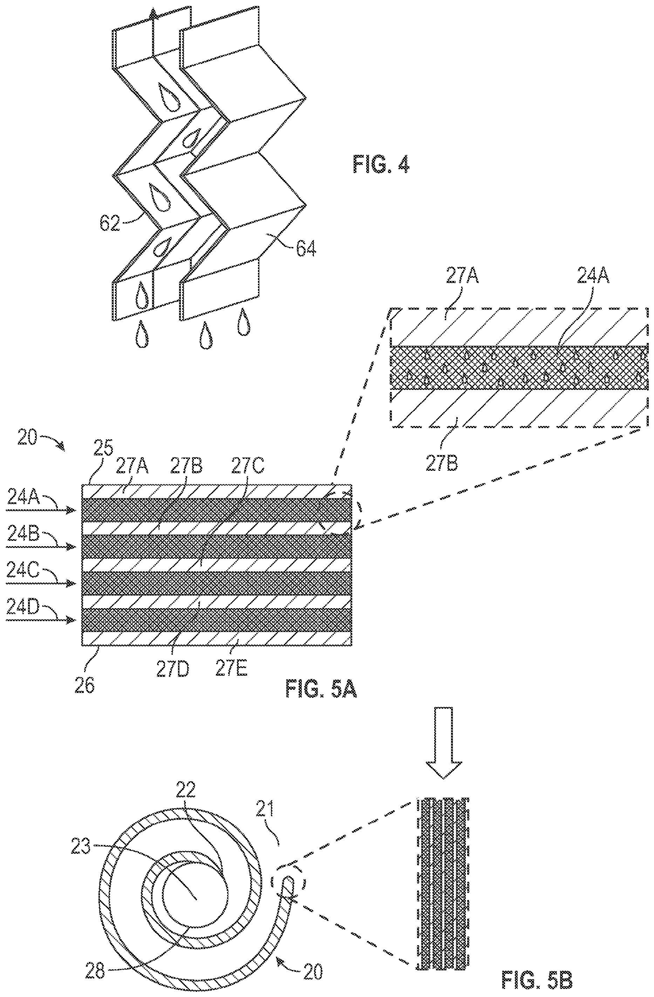

FIGS. 5A-5B illustrate a desorber 20, according to an embodiment for a microemulsion-based dehumidification system that is part of an air conditioning system, e.g., a heating venting air conditioning (HVAC) system and/or a refrigeration system. The desorber 20 may provide advantages typically found in a more complex system. The desorber 20 may be in the form of a replaceable module or cartridge, have a relatively small footprint and provide a relatively low pressure drop.

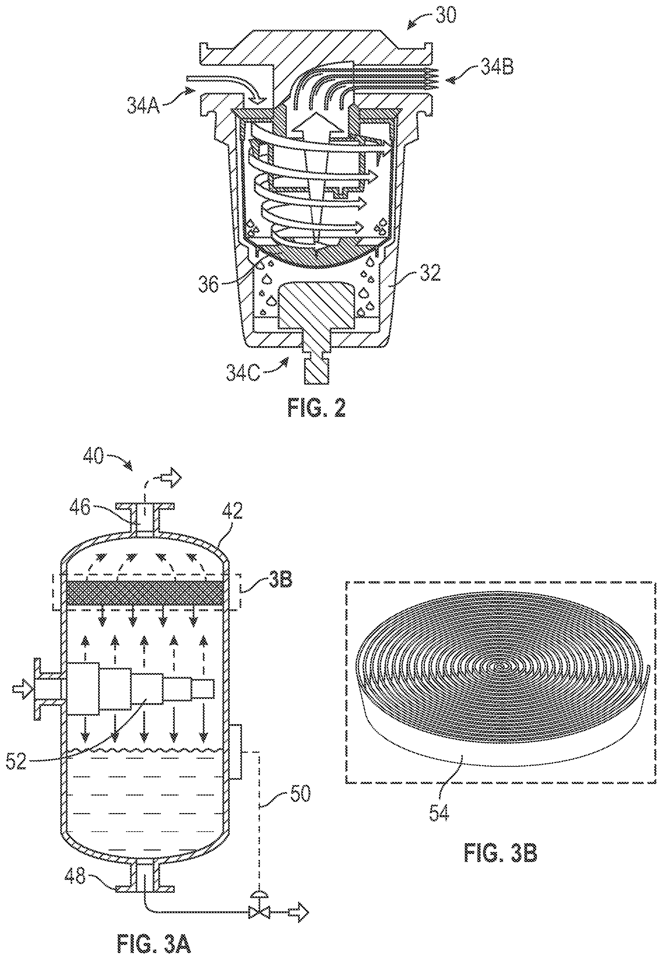

Referring now to FIGS. 2, 5A and 5B, the desorber 20 may minimize aerosol concentration of oil in part by functioning as a centrifugal separator 30. The centrifugal separator 30 may include a housing 32 with a plurality of openings, including first opening 34a, second opening 34b and third opening 34c. The first opening 34a functions as an inlet for oil impregnated air, and the second opening 34b functions as an outlet for partially desorbed air. The third opening 34c functions as a drain for oil collected in the separator 30. A centrifugal separator 30 forces incoming air into a spiral flow, which drives the larger and heavier droplets toward the walls of the housing 32 to be separated out by gravity.

Similarly, as illustrated in FIG. 5B, the disclosed desorber 20 has a spiral wound configuration, e.g., in a top view thereof, to form a centrifugal separator. The spiral curve of the desorber 20 is illustrated as planar and more specifically as an Archimedean spiral or involute of a circle. Other two dimensional spirals and three dimensional spirals may be applicable. Oil impregnated airflow enters in the outer radial segment 21 of the desorber 20 and speeds up while traveling to the center 22 of the desorber 20 into an oil collection tube 23. Larger, heavier droplets are centrifugally driven outward.

Referring now to FIGS. 3A, 3B, 5A and 5B, smaller aerosol particles in oil impregnated air may not be removed with centrifugal motion because smaller particles follow air streamlines. A known centrifugal separator 30 may therefore be fluidly followed by a known demister 40. The demister 40 includes a demister housing 42, a demister inlet carrying oil impregnated air, a demister vapor outlet 48 carrying oil vapor demisted from the oil impregnated air, a demisted air outlet 46 carrying demisted air. The demister 40 may also include a pressure release loop 50 fluidly connected to the demisted vapor outlet 48. Internally, the demister 40 may contain a diffuser 52 and one or more mesh pads 54, illustrated in greater detail in FIG. 3B. The mesh pads 54 capture smaller oil droplets by impaction.

Similarly, the disclosed embodiment in FIGS. 5A and 5B provides a plurality of layers of de-entrainment mesh material, including layers 24a-24d. The mesh layers 24a-24b may be spaced along a top-down direction for the desorber 20, i.e., from the top end 25 of the desorber 20 to the bottom end 26 of the desorber 20. The mesh layers 24a-24d may extend along the direction of airflow, so that each layer extends between the radial outside of the desorber 21 and the radial inside of the desorber 22. The top-down span or height of the layers of mesh material 24a-24d are illustrated as each being substantially the same, though this is not a requirement. The area of each of the mesh layers 24a-24d, and the area summation of the layers, may be sufficient to demist air traveling through the desorber 20. The mesh layers 24a-24d may be plastic.

Turning now to FIGS. 4, 5A and 5B, the impregnated air in a known desorber may pass over coalescing membranes 62, 64. The membranes 62, 64 may coalesce remaining oil droplets into larger drops, which drain by gravity. In the disclosed embodiment, illustrated in FIGS. 5A and 5B, as impregnated air travels through the desorber 20, the shape of the mesh layers 24a-24d provides a large area for impaction and oil droplets coalesce as oil collides with the mesh surfaces and eventually drains downwards. For less demanding applications, such as with microemulsion-based dehumidification systems, the flow path could include a helically shaped desorber providing a continuous change of directional flow. Such shape can be obtained with a 3D curve (not illustrated) rather than a spiral 2D curve.

A plurality of connector layers 27a-27e are interlaid with the mesh layers 24a-24d between the top end and the bottom end of the desorbing sheet. The connector layers 27a-27e are substantially air impermeable and extend between the external end 21 and the internal end 22 of the desorber 20. The plurality of connector layers 27a-27e are, e.g., plastic. Other spacer material may be utilized for the connector layers.

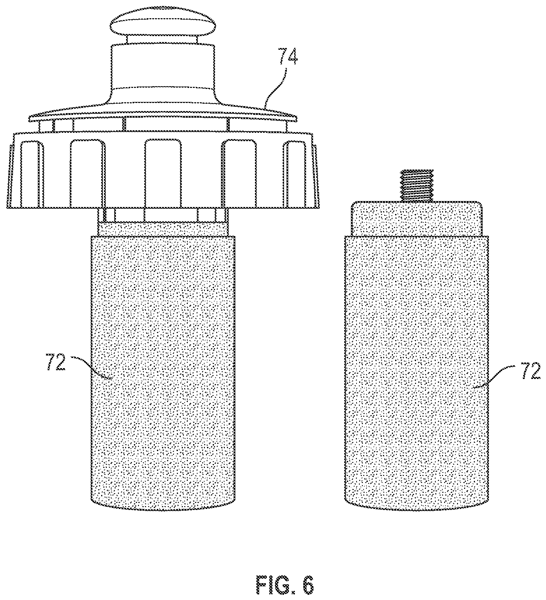

Turning now to FIGS. 5A, 5B and 6, an outer filter 72 is used as a fourth desorbing element for processes where oil vapors in addition to oil aerosols are not tolerated. In a known desorbing system a refrigerant dryer (not illustrated) may be utilized or an activated carbon cartridge such as found within certain drinking bottles 74 may be wrapped around the desorber 20 to form the outer filter 72. Similarly, the disclosed embodiment provides an inner vapor filter which is an active carbon filter cartridge 28 at the inner radius 22 of the desorber 20. The specific diameter and length of the active carbon cartridge 28 is sufficient to provide desired filtering of oil vapor in air traveling therethrough.

For microemulsion-based dehumidification systems, the use of four separate devices described above results in excessive cost and pressure drop. The above disclosed desorber 20 may provide a relatively compact system designed to accomplish the same goal of more complex systems by combining the actions of centrifugal motion, impaction and coalescing.

In sum as illustrated in FIG. 5B the packaging of the desorber 20 is a spiral-wound sheet. The desorber 20 comprises one or more membrane envelopes, wrapped around the central oil collection tube 23, and the tube 23 is surrounded by the active carbon cartridge 28. The permeating air travels toward the oil collection tube 23 along the spiral path with minimum pressure drop.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present invention, which is defined by the claims. Therefore, it is intended that the present invention not be limited to the particular embodiment disclosed, but that the present invention will include all embodiments falling within the scope of the claims.

## Claims

1. A desorber for minimizing aerosol concentration of oil for an air conditioning system with an integrated microemulsion-based air dehumidification system, the desorber comprising:
a spiral-wound sheet that is wound to form an exterior end (21), an interior end (22), a top end (25) and a bottom end (26), wherein a collection tube (23) is disposed at the interior end,
wherein the spiral-wound sheet comprises:
a plurality of de-entrainment mesh layers (24A-24D) extending between the exterior end (21) and the interior end (22) of the spiral-wound sheet, and
a plurality of substantially air impermeable connector layers (27A-27E) extending between the exterior end (21) and the interior end (22) of the spiral-wound sheet, and
wherein:
the connector layers (27A-27E) are interlaid with the mesh layers between the top end (25) and the bottom end (26) of the spiral-wound sheet;
the connector layers (27A-27E) are interlaid with the mesh layers (24A-24D) in a stripe pattern; and
the collection tube (23) is at a radial center of the spiral-wound sheet (20),
**characterized in that**:
the collection tube (23) is surrounded by an inner vapor filter, the inner vapor filter being an activated carbon cartridge (28) having a diameter and length that is sufficient to provide desired filtering of oil vapor in air traveling therethrough; and the desorber includes another activated carbon cartridge, wrapped around the spiral-wound sheet, forming an outer vapor filter (72).

2. The desorber for minimizing aerosol concentration of oil of claim 1 wherein top and bottom layers of the spiral-wound sheet are connector layers (27A-27E).

3. The desorber for minimizing aerosol concentration of oil of claim 2 wherein the mesh layers (24A-24D) and/or connector layers (27A-27E) are substantially dimensionally alike.

4. An air conditioning system with an integrated microemulsion-based air dehumidification system, the microemulsion-based air dehumidification system including the desorber for minimizing aerosol concentration of oil of any preceding claim.

5. A method of desorbing oil from oil impregnated air in an air conditioning system with integrated microemulsion-based air dehumidification system, the method comprising:
channeling the air into a desorber for minimizing aerosol concentration of oil having a spiral-wound sheet, the spiral-wound sheet having been wound to form an exterior end and an interior end, a top end (25) and a bottom end (26), wherein a collection tube (23) is connected to the interior end,
wherein the spiral-wound sheet comprises:
a plurality of de-entrainment mesh layers (27A-27E) extending between the exterior end and the interior end of the spiral-wound sheet, and
a plurality of substantially air impermeable connector layers (27A-27E) extending between the exterior end and the interior end of the spiral-wound sheet, and wherein:
the connector layers (27A-27E) are interlaid with the mesh layers between the top end and the bottom end of the spiral-wound sheet,
the connector layers (27A-27E) are interlaid with the mesh layers (24A-24D) in a stripe pattern; and
the collection tube (23) is at a radial center of the spiral-wound sheet,
**characterized in that**:
the collection tube is surrounded by an inner vapor filter, the inner vapor filter being an activated carbon cartridge (28) having a diameter and length that is sufficient to provide desired filtering of oil vapor in air traveling therethrough; and
the desorber includes another activated carbon cartridge, wrapped around the spiral-wound sheet, forming an outer filter (72).

## Patentansprüche

1. Desorber zur Minimierung der Aerosolkonzentration von Öl für eine Klimaanlage mit integriertem mikroemulsionsbasiertem Luftentfeuchtungssystem, wobei der Desorber umfasst:
ein spiralförmig gewickeltes Blatt, das so gewickelt ist, dass es ein äußeres Ende (21), ein inneres Ende (22), ein oberes Ende (25) und ein unteres Ende (26) bildet, wobei an dem inneren Ende ein Sammelrohr (23) angeordnet ist,
wobei das spiralgewickelte Blatt umfasst:
eine Vielzahl von Entmagnetisierungsnetzschichten (24A-24D), die sich zwischen dem äußeren Ende (21) und dem inneren Ende (22) des spiralgewickelten Blatts erstrecken, und
eine Vielzahl von im Wesentlichen luftundurchlässigen Verbindungsschichten (27A-27E), die sich zwischen dem äußeren Ende (21) und dem inneren Ende (22) des spiralgewickelten Blatts erstrecken, und
wobei:
die Verbindungsschichten (27A-27E) mit den Netzschichten zwischen dem oberen Ende (25) und dem unteren Ende (26) des spiralgewickelten Blatts verflochten sind;
die Verbindungsschichten (27A-27E) mit den Netzschichten (24A-24D) in einem Streifenmuster verflochten sind; und
sich das Sammelrohr (23) in der radialen Mitte des spiralgewickelten Blatts (20) befindet,
**dadurch gekennzeichnet, dass**:
das Sammelrohr (23) von einem inneren Dampffilter umgeben ist, wobei der innere Dampffilter eine Aktivkohlepatrone (28) mit einem Durchmesser und einer Länge ist, die ausreichen, um die gewünschte Filterung von Öldampf in der hindurchströmenden Luft zu gewährleisten; und
der Desorber eine weitere Aktivkohlepatrone enthält, die um das spiralförmig gewickelte Blatt gewickelt ist und einen äußeren Dampffilter (72) bildet.

2. Desorber zur Minimierung der Aerosolkonzentration von Öl nach Anspruch 1, wobei die obere und die untere Schicht des spiralgewickelten Blatts Verbindungsschichten (27A-27E) sind.

3. Desorber zur Minimierung der Aerosolkonzentration von Öl nach Anspruch **2,** bei dem die Netzschichten (24A-24D) und/oder Verbindungsschichten (27A-27E) im Wesentlichen maßgleich sind.

4. Klimaanlage mit integriertem mikroemulsionsbasiertem Luftentfeuchtungssystem, wobei das mikroemulsionsbasierte Luftentfeuchtungssystem den Desorber zur Minimierung der Aerosolkonzentration von Öl nach einem der vorhergehenden Ansprüche enthält.

5. Verfahren zum Desorbieren von Öl aus ölimprägnierter Luft in einer Klimaanlage mit integriertem, mikroemulsionsbasiertem Luftentfeuchtungssystem, wobei das Verfahren umfasst:
Leiten der Luft in einen Desorber zur Minimierung der Aerosolkonzentration von Öl, der ein spiralförmig gewickeltes Blatt aufweist, wobei das spiralförmig gewickelte Blatt gewickelt wurde, um ein äußeres Ende und ein inneres Ende, ein oberes Ende (25) und ein unteres Ende (26) zu bilden, wobei ein Sammelrohr (23) mit dem inneren Ende verbunden ist,
wobei das spiralgewickelte Blatt umfasst:
eine Vielzahl von Entmagnetisierungsnetzschichten (27A-27E), die sich zwischen dem äußeren Ende und dem inneren Ende des spiralgewickelten Blatts erstrecken, und
eine Vielzahl von im Wesentlichen luftundurchlässigen Verbindungsschichten (27A-27E), die sich zwischen dem äußeren Ende und dem inneren Ende des spiralgewickelten Blatts erstrecken, und wobei:
die Verbindungsschichten (27A-27E) mit den Netzschichten zwischen dem oberen Ende und dem unteren Ende des spiralgewickelten Blatts verflochten sind;
die Verbindungsschichten (27A-27E) mit den Netzschichten (24A-24D) in einem Streifenmuster verflochten sind; und
sich das Sammelrohr (23) in der radialen Mitte des spiralgewickelten Blatts befindet,
**dadurch gekennzeichnet, dass**:
das Sammelrohr von einem inneren Dampffilter umgeben ist, wobei der innere Dampffilter eine Aktivkohlepatrone (28) mit einem Durchmesser und einer Länge ist, die ausreichen, um die gewünschte Filterung von Öldampf in der hindurchströmenden Luft zu gewährleisten; und
der Desorber eine weitere Aktivkohlepatrone enthält, die um das spiralförmig gewickelte Blatt gewickelt ist und einen äußeren Filter (72) bildet.

## Revendications

1. Désorbeur permettant de minimiser une concentration d'aérosol d'huile pour un système de conditionnement d'air avec un système intégré de déshumidification d'air à base de microémulsion, le désorbeur comprenant :
une feuille enroulée en spirale qui est enroulée de sorte à former une extrémité extérieure (21), une extrémité intérieure (22), une extrémité supérieure (25) et une extrémité inférieure (26), dans lequel un tube de collecte (23) est disposé au niveau de l'extrémité intérieure,
dans lequel la feuille enroulée en spirale comprend :
une pluralité de couches de maille (24A-24D) de désentraînement s'étendant entre l'extrémité extérieure (21) et l'extrémité intérieure (22) de la feuille enroulée en spirale, et
une pluralité de couches de connecteur (27A-27E) sensiblement imperméables à l'air s'étendant entre l'extrémité extérieure (21) et l'extrémité intérieure (22) de la feuille enroulée en spirale, et
dans lequel :
les couches de connecteur (27A-27E) sont intercalées avec les couches de maille entre l'extrémité supérieure (25) et l'extrémité inférieure (26) de la feuille enroulée en spirale ; les couches de connecteur (27A-27E) sont intercalées avec les couches de maille (24A-24D) selon un motif à rayures ; et
le tube de collecte (23) est situé au niveau d'un centre radial de la feuille enroulée en spirale (20),
**caractérisé en ce que** :
le tube de collecte (23) est entouré d'un filtre à vapeur interne, le filtre à vapeur interne étant une cartouche de charbon actif (28) présentant un diamètre et une longueur qui est suffisante pour assurer un filtrage souhaité de la vapeur d'huile dans de l'air qui passe à travers celle-ci ; et
le désorbeur comporte une autre cartouche de charbon actif, enroulée autour de la feuille enroulée en spirale, qui forme un filtre à vapeur externe (72).

2. Désorbeur permettant de minimiser une concentration d'aérosol d'huile selon la revendication 1, dans lequel des couches supérieure et inférieure de la feuille enroulée en spirale sont des couches de connecteur (27A-27E).

3. Désorbeur permettant de minimiser une concentration d'aérosol d'huile selon la revendication 2, dans lequel les couches de maille (24A-24D) et/ou les couches de connecteur (27A-27E) sont sensiblement identiques en termes de dimensions.

4. Système de conditionnement d'air avec un système intégré de déshumidification d'air à base de microémulsion, le système de déshumidification d'air à base de microémulsion comportant le désorbeur permettant de minimiser une concentration d'aérosol d'huile selon une quelconque revendication précédente.

5. Procédé de désorption d'huile à partir d'air imprégné d'huile dans un système de conditionnement d'air avec un système intégré de déshumidification d'air à base de microémulsion, le procédé comprenant :
l'acheminement de l'air dans un désorbeur permettant de minimiser une concentration d'aérosol d'huile présentant une feuille enroulée en spirale, la feuille enroulée en spirale ayant été enroulée de sorte à former une extrémité extérieure et une extrémité intérieure, une extrémité supérieure (25) et une extrémité inférieure (26), dans lequel un tube de collecte (23) est relié à l'extrémité intérieure,
dans lequel la feuille enroulée en spirale comprend :
une pluralité de couches de maille (27A-27E) de désentraînement s'étendant entre l'extrémité extérieure et l'extrémité intérieure de la feuille enroulée en spirale, et
une pluralité de couches de connecteur (27A-27E) sensiblement imperméables à l'air s'étendant entre l'extrémité extérieure et l'extrémité intérieure de la feuille enroulée en spirale, et
dans lequel :
les couches de connecteur (27A-27E) sont intercalées avec les couches de maille entre l'extrémité supérieure et l'extrémité inférieure de la feuille enroulée en spirale,
les couches de connecteur (27A-27E) sont intercalées avec les couches de maille (24A-24D) selon un motif à rayures ; et
le tube de collecte (23) est situé au niveau d'un centre radial de la feuille enroulée en spirale,
**caractérisé en ce que** :
le tube de collecte est entouré d'un filtre à vapeur interne, le filtre à vapeur interne étant une cartouche de charbon actif (28) présentant un diamètre et une longueur qui est suffisante pour assurer un filtrage souhaité de la vapeur d'huile dans de l'air qui passe à travers celle-ci ; et
le désorbeur comporte une autre cartouche de charbon actif, enroulée autour de la feuille enroulée en spirale, qui forme un filtre externe (72).
